# EUROPÄISCHE PATENTSCHRIFT

(11) **EP 0 902 812 B1**
(45) Veröffentlichungstag und Bekanntmachung des Hinweises auf die Patenterteilung: **23.08.2000**
(21) Anmeldenummer: 97927077.4
(22) Anmeldetag: 28.05.1997
(51) Int. Cl.: C08L 71/12, C08L 51/04

(54) **FLAMMWIDRIGE THERMOPLASTISCHE FORMMASSEN AUF BASIS VON POLYPHENYLENETHERN**
NON-FLAMMABLE, THERMOPLASTIC MOULDED MATERIALS BASED ON POLYPHENYLENE ETHERS
MATIERES THERMOPLASTIQUES MOULABLES IGNIFUGEES A BASE D'ETHERS DE POLYPHENYLENE

(30) Priorität: 30.05.1996 DE 19621734
(43) Veröffentlichungstag der Anmeldung: 24.03.1999
(73) Patentinhaber: BASF AKTIENGESELLSCHAFT, 67056 Ludwigshafen (DE)
(72) Erfinder: WEBER, Martin, D-67487 Maikammer (DE); WEISS, Robert, D-67281 Kirchheim (DE); HECKMANN, Walter, D-69469 Weinheim (DE); HINGMANN, Roland, D-68526 Ladenburg (DE); HÄHNLE, Hans-Joachim, D-67435 Neustadt (DE)
(74) Vertreter: Kinzebach, Werner, Dr.
(86) Internationale Anmeldenummer: EP9702797
(87) Internationale Veröffentlichungsnummer: WO9745487

(56) Entgegenhaltungen:
- EP-A- 0 081 230
- EP-A- 0 176 774
- EP-A- 0 442 180
- EP-A- 0 530 572
- EP-A- 0 550 204
- US-A- 4 107 232

## Beschreibung

Die vorliegende Erfindung betrifft flammwidrige thermoplastische Formmassen auf Basis von Polyphenylenethern und vinylaromatischen Polymeren mit verbesserter Brandfestigkeit sowie die Verwendung der erfindungsgemäßen thermoplastischen Formmassen zur Herstellung von Fasern, Folien und Formkörpern.

Polymermischungen aus Polyphenylenether (PPE) und vinylaromatischen Polymeren sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (High Impact Polystyrol, HIPS), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, Hanser Verlag, München, 1993.

Ein wesentlicher Vorteil der Polymerblends aus Polyphenylenether und Styrolpolymerisaten ist darin zu sehen, daß durch Zusatz halogenfreier Flammschutzmittel, wobei insbesondere phosphorhaltige Verbindungen zu erwähnen sind, Formmassen hergestellt werden können, die flammwidrig sind und daher für viele Anwendungen im Bereich der Elektrotechnik eingesetzt werden. Für den Einsatz im Anwendungsbereich Elektrotechnik ist insbesondere die Prüfung der Flammwidrigkeit nach UL 94 (in J. Troitzsch, "International Plastic Flammability Handbook", S. 346 ff., Hanser Verlag, München, 1990) aussschlaggebend. Bei dieser Prüfung werden vertikal befestigte Probekörper mehrfach beflammt, wobei sich der Probekörper sehr stark erhitzt, was in vielen Fällen dazu führt, daß brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Das Problem des brennenden Abropfens bei der UL 94-Prüfung ist seit langem bekannt und wird in der Technik meist durch Zusatz kleiner Mengen Teflon als Antitropfmittel gelöst (US-Patentschrift 4,107,232). Im Rahmen der Bestrebungen, den Einsatz halogenhaltiger Verbindungen in thermoplastischen Formmassen vollständig zu vermeiden, besteht ein Bedarf an wirksamen halogenfreien Antitropfmitteln für flammgeschützte Formmassen auf Basis von Polyphenylenether und vinylaromatischen Polymeren.

Aus dem Stand der Technik ist beispielsweise bekannt, die Tropffestigkeit von thermoplastischen PPE/HIPS-Formmassen durch Zusatz von hochmolekularem Polyethylen zu verbessern. So schlägt die EP 0550204 als Antitropfmittel ultrahochmolekulares Polyethylen mit einem Molekulargewicht (Gewichtsmittel) von mehr als 100 000 und insbesondere von 2 bis 6 Millionen vor.

Außerdem beschreibt der Stand der Technik, daß das Tropfverhalten von PPE/HIPS-Formmassen durch Zusatz von hochmolekularem Polystyrol verbessert werden kann. So lehrt beispielsweise die EP 0305764 die Verwendung von Polystyrol mit einem Molekulargewicht (Gewichtsmittel) von mehr als 400 000 und die EP 0476366 die Verwendung von Polystyrol mit einem Molekulargewicht von mehr als einer Million.

Der Zusatz von hochmolekularem Polyethylen bzw. hochmolekularem Polystyrol ist jedoch mit Nachteilen verbunden. Wie eine UL 94-Prüfung der auf diese Weise modifizierten PPE/HIPS-Formmassen zeigt, bewirken diese Antitropfmittel eine deutliche Erhöhung der Brandzeit.

Der Erfindung liegt somit die Aufgabe zugrunde ein halogenfreies Antitropfmittel bereitzustellen, welches in thermoplastischen Formmassen auf Basis von Polyphenylenethern und vinylaromatischen Polymeren verwendet werden kann, ohne deren Brandzeit wesentlich zu beeinträchtigen.

Überraschenderweise wird die erfindungsgemäße Aufgabe gelöst durch Bereitstellung flammwidriger thermoplastischer Formmassen, enthaltend
A) mindestens einen Polyphenylenether,
B) mindestens ein vinylaromatisches Polymer, und
C) mindestens ein Flammschutzmittel,
die dadurch gekennzeichnet sind, daß sie außerdem
D) als Antitropfmittel ein hochmolekulares Polymerisat auf Basis von Acrylamid mit einer Viskosität von mehr als etwa 1,5 mPas, gemessen in 0,1%-iger wäßriger Lösung bei 25°C, umfassen.

Vorzugsweise liegt die Viskosität des Antitropfmittels im Bereich von etwa 2 bis 6 mPas, insbesondere bei etwa 3 bis 4,5 mPas.

Weiterhin kann das Antitropfmittel bis zu 95 Gew.-%, wie z.B. etwa 10 bis etwa 70 Gew.-% oder etwa 20 bis etwa 50 Gew.-%, von Acrylamid verschiedene Comonomereinheiten enthalten.

Als Comonomer kann wenigstens eine Verbindung verwendet werden, die ausgewählt ist unter Acrylsäure, Methacrylsäure, Styrolsulfonsäure, Ethylensulfonsäure und den Salzen davon, Dimethylaminoethylmethacrylat, Dimethylaminoethylacrylat und den Hydrochloriden davon sowie Diallyldimethylammoniumchlorid.

Eine bevorzugte Ausführungsform der Erfindung betrifft eine Formmasse, enthaltend
A) etwa 5 bis etwa 97,5 Gew.-% Polyphenylenether,
B) etwa 1 bis etwa 93,5 Gew.-% Styrolpolymerisat,
C) etwa 1 bis etwa 20 Gew.-% eines Flammschutzmittels,
D) etwa 0,5 bis etwa 25 Gew.-% Antitropfmittel,
E) 0 bis etwa 50 Gew.-% Schlagzähmodifier, sowie
F) 0 bis etwa 60 Gew.-% üblicher Zusätze.

Aufgrund der hohen Wirksamkeit der erfindungsgemäß eingesetzten Polyacrylamidpolymere werden außerdem die mechanischen Eigenschaften flammwidriger PPE/HIPS-Blends nicht beeinträchtigt.

Ein weiterer Gegenstand der vorliegenden Erfindung betrifft die Verwendung einer Formmasse gemäß obiger Definition zur Herstellung von Fasern, Folien und Formkörpern, sowie Fasern, Folien und Formkörper, die unter Verwendung dieser Formmassen hergestellt wurden.

Die in den erfindungsgemäßen Formmassen enthaltenen Polyphenylenether (Komponente A) sind an sich bekannt. Die Polyphenylenether sind in den erfindungsgemäßen Formmassen in einer Menge von etwa 5 bis etwa 97,5, vorzugsweise etwa 15 bis etwa 87,5 und insbesondere etwa 20 bis etwa 82 Gew.-%, bezogen auf das Gesamtgewicht der Formmasse, enthalten.

Komponente A umfaßt insbesondere Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, langkettige Alkylreste mit bis zu 20 Kohlenstoffatomen, wie Lauryl und Stearyl sowie kurzkettige Alkylreste mit 1 bis 4 Kohlenwasserstoffatomen, die vorzugsweise kein α-ständiges tertiäres Wasserstoffatom aufweisen, z.B. Methyl-, Ethyl-, Propyl- oder Butylreste, zu nennen. Die Alkylreste können wiederum durch Halogenatome, wie Chlor oder Brom, oder durch eine Hydroxylgruppe einfach oder mehrfach substituiert sein. Weitere Beispiele möglicher Substituenten sind Alkoxyreste, vorzugsweise mit 1 bis zu 4 Kohlenstoffatomen oder gegebenenfalls durch Halogenatome und/oder C₁-C₄-Alkylgruppen gemäß obiger Definition einfach oder mehrfach substituierte Phenylreste. Ebenfalls geeignet sind Copolymere verschiedener Phenole, wie z.B. Copolymere von 2,6-Dimethylphenol und 2,3,6-Trimethylphenol. Selbstverständlich können auch Gemische verschiedener Polyphenylenether eingesetzt werden.

Beispiele für erfindungsgemäß verwendbare Polyphenylenether sind Poly(2,6-dilauryl-1,4-phenylenether), Poly(2,6-diphenyl-1,4-phenylenether), Poly(2,6-dimethoxy-1,4-phenylenether), Poly(2,6-diethoxy-1,4-phenylenether), Poly(2-methoxy-6-ethoxy-1,4-phenylenether), Poly(2-ethyl-6-stearyloxy-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether).

Bevorzugt werden Polyphenylenether eingesetzt, die als Substituenten Alkylreste mit 1 bis 4 Kohlenstoffatomen aufweisen, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren, wie Fumarsäure, Maleinsäure, Maleinsäureanhydrid oder Zitronensäure, modifiziert sind.

Derartige Polyphenylenether sind u.a. in der WO 87/00540 beschrieben.

Insbesondere werden solche Polyphenylenether in den Zusammensetzungen eingesetzt, die ein mittleres Molekulargewicht M_{w} (Gewichtsmittel) von etwa 8 000 bis 70 000, bevorzugt etwa 12 000 bis 50 000 und insbesondere etwa 20 000 bis 45 000 aufweisen.

Dies entspricht einer Grenzviskosität von etwa 0,18 bis 0,7, bevorzugt von etwa 0,25 bis 0,55, und insbesondere von etwa 0,30 bis 0,50 dl/g, gemessen in Chloroform bei 25°C.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel bei Raumtemperatur). Die Lösung der Polyphenylenether-Proben in THF erfolgt unter Druck bei 110°C, wobei 0,16 ml einer 0,25 Gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilung durch eine GPC-Laser-Lichtstreuungskombination bestimmt wurde.

Das vinylaromatische Polymer (Komponente B) ist in den erfindungsgemäßen Formmassen in Mengen von etwa 1 bis etwa 93,5, vorzugsweise etwa 10 bis etwa 82,5 und insbesondere etwa 15 bis etwa 77,5 Gew.-%, bezogen auf das Gesamtgewicht der Formmasse, enthalten. Die Komponente B ist ein vinylaromatisches Polymer, das vorzugsweise mit dem eingesetzten Polyphenylenether verträglich ist. Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt etwa 5 bis 25 Gew-%, vorzugsweise etwa 8 bis 17 Gew.-%, bezogen auf das Gewicht der Komponente B.

Geeignet sind vor allem schlagfestmodifizierte Polystyrole oder Copolymere aus Styrol und anderen vinylaromatischen Verbindungen. Derartige schlagzähmodifizierte Polystyrole sind allgemein als sogenanntes HIPS bekannt und größtenteils im Handel erhältlich. Sie weisen eine Viskositätszahl (VZ) der Hartmatrix von etwa 50 bis etwa 130 ml/g (0,5 %ig in Toluol bei 23°C), vorzugsweise von etwa 60 bis etwa 90 ml/g, auf.

Als monovinylaromatische Verbindungen kommen dabei kern- oder seitenkettenalkylierte Styrole in Betracht. Als Beispiele seien Chlorstyrol, o-Methylstyrol, p-Methylstyrol, Vinyltoluol und p-t-Butylstyrol genannt. Vorzugsweise wird jedoch Styrol allein verwendet.

Die Homopolymerisate werden im allgemeinen nach den bekannten Verfahren in Masse, Lösung und Suspension hergestellt (vgl. Ullmanns Enzyklopädie der techn. Chemie, Band 19, Seiten 265 bis 272, Verlag Chemie, Weinheim 1980). Die Homopolymerisate können Molekulargewichte M_{w} von etwa 3 000 bis 300 000 (Gewichtsmittel) aufweisen, die nach üblichen Methoden bestimmt werden können. Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage. Geeignete Beispiele für solche C₁-C₁₀-Alkylgruppen umfassen Methyl, Ethyl, n- und i-Propyl, n- und tert.-Butyl, sowie gegebenenfalls verzweigtes Pentyl, Hexyl, Heptyl, Octyl, Nonyl und Decyl. Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in US 4,360,618, US 4,405,753 und in der Veröffentlichung von J.R. Fried, G.A. Hanna, Polymer Eng. Sci., Band 22 (1982), Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate weisen im allgemeinen Gewichtsmittel des Molekulargewichts (M_{w}) von etwa 10 000 bis etwa 300 000 auf, die nach üblichen Methoden bestimmt werden können.

Erfindungsgemäß bevorzugt wird als Komponente B schlagfest modifiziertes Polystyrol verwendet.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2,694,692 beschrieben ist, und Verfahren zur Massesuspensionspolymerisation, wie sie beispielsweise in der US-Patentschrift 2,862,906 beschrieben sind. Selbstverständlich sind auch andere Verfahren anwendbar, sofern die gewünschte Teilchengröße der Kautschukphase eingestellt wird.

Als Flammschutzmittel (Komponente C) enthalten die erfindungsgemäßen Formmassen etwa 1 bis etwa 20, vorzugsweise etwa 2 bis etwa 19 und insbesondere etwa 2,5 bis etwa 18 Gew.-% wenigstens eines Flammschutzmittels. Geeignet sind z.B. phosphororganische Verbindungen der allgemeinen Formeln (I), (II) und (III): 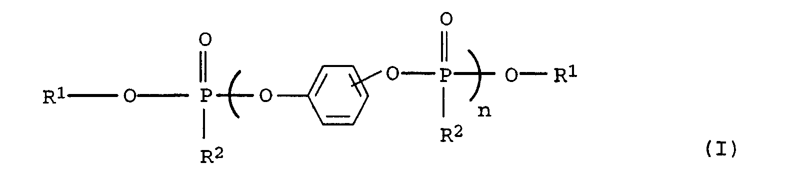 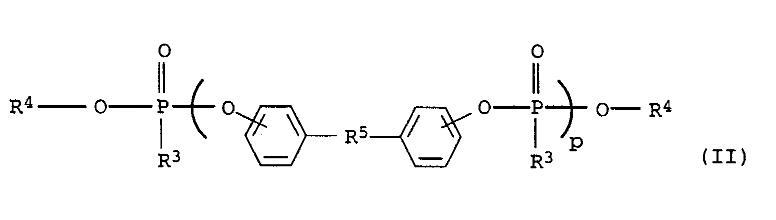 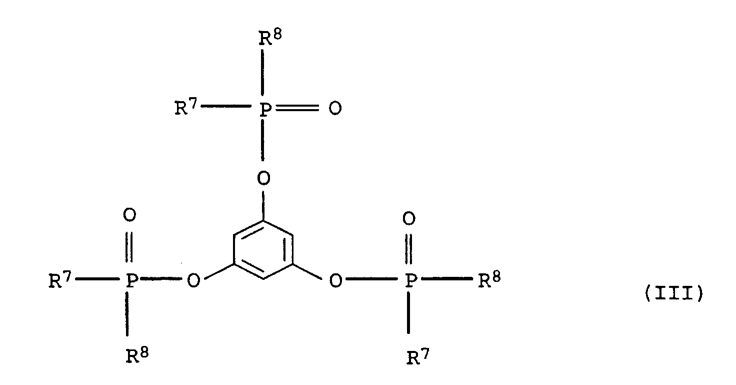 worin
- R¹ und R⁴: unabhängig voneinander für gegebenenfalls substituiertes Alkyl oder Aryl stehen;
- R², R³, R⁷ und R⁸: unabhängig voneinander für gegebenenfalls substituiertes Alkyl, Aryl, Alkoxy oder Aryloxy stehen,
- R⁵: für Alkylen, -SO₂-, -CO-, -N=N- oder -(R⁶)P(O)- steht, worin
- R⁶: für gegebenenfalls substituiertes Alkyl, Aryl oder Alkylaryl steht und
- n: und p unabhängig voneinander einen ganzzahligen Wert von 1 bis 30 einnehmen.

Geeignete Substituenten in Verbindungen der Formeln (I), (II) und (III) sind Cyano, Hydroxy, C₁-C₄-Alkyl und Halogen, wie F, Cl, Br, J.

Bevorzugte Alkylreste in Verbindung der Formel (I), (II) und (III) sind C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und Cyanoethyl.

Bevorzugte Arylreste in Verbindungen der Formeln (I), (II) und (III) sind Phenyl und Naphthyl sowie einfach oder mehrfach substituierte Reste, wie Tolyl, Xylyl, Mesityl und Cresyl.

Bevorzugte Alkylarylreste in Verbindungen der Formeln (I), (II) und (III) sind C₁-C₂₀-Alkylaryl- und insbesondere C₁-C₁₂-Alkylarylreste, wobei Alkylteil und Arylteil wie oben definiert sind.

Bevorzugte Cycloalkylgruppen in Verbindungen der Formeln (I), (II) und (III) umfassen C₃-C₁₀-Cycloalkylgruppen, wie Cyclobutyl, Cyclopentyl, Cyclohexyl und Cycloheptyl.

Bevorzugte Alkoxyreste in Verbindungen der Formeln (I), (II) und (III) sind C₁-C₂₀-Alkoxyreste, wobei der C₁-C₂₀-Alkylteil wie oben definiert ist.

Bevorzugte Aryloxyreste in Verbindungen der Formeln (I), (II) und (III) sind solche, worin der Arylanteil wie oben definiert ist.

Bevorzugte Alkylenreste in Verbindungen der Formeln (I), (II) und (III) sind C₁-C₆-Alkylenreste, wie Methylen, Ethylen, Propylen und Hexylen.

Die Herstellung von Phosphorsäureestern ist beschrieben in Houben-Weyl, "Methoden der organischen Chemie" Bd. XII/2, Thieme Verlage 1972. Bevorzugt werden die Verbindungen C durch Umesterung unter Basenkatalyse bzw. durch Umsetzung von Phosphoroxichlorid mit Phenolen, unter Katalyse von Mg- bzw. Al-Chlorid, erhalten.

Bevorzugte Produkte der Formel (I) sind Hydrochinon- oder Resorcindiphenylphosphat. Bevorzugte Produkte der Formel (II) werden erhalten durch Reaktion eines Bisphenols (vgl. z. B. Ullmann's Encyclopedia of Industrial Chemistry, 5. Auflage, Bd. A19, S. 349), wie z. B. von Bisphenol A oder S, mit Triphenylphosphat unter Basenkatalyse.

Dabei ist zu beachten, daß die technisch verfügbaren Produkte gewöhnlich Mischungen verschiedener Oligomere bzw. Isomere darstellen können.

Als Komponente C) können die erfindungsgemäßen Formmassen auch die folgenden Verbindungen einzeln oder im Gemisch enthalten:
(1) Phosphinoxide der allgemeinen Formel (IV) 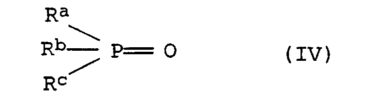 wobei R^{a}, R^{b} und R^{c} gleich oder verschieden sind und ausgewählt sind unter einem Wasserstoffatom, geradkettigen oder verzweigten, gegebenenfalls substituierten Alkyl-, Aryl-, Alkylaryl- oder Cycloalkylgruppen mit bis zu 40 Kohlenstoffatomen.

Bevorzugte Alkylreste sind hierbei C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und substituierte Alkylreste, wie z.B. Cyanoethyl.

Bevorzugte Arylreste sind Phenyl und Naphthyl sowie einfach oder mehrfach substituierte Reste, wie Tolyl, Xylyl, Mesityl und Cresyl.

Bevorzugte Alkylarylreste sind C₁-C₂₀-Alkylaryl- und insbesondere C₁-C₁₂-Alkylarylreste, wobei Alkylteil und Arylteil wie oben definiert sind.

Bevorzugte Cycloalkylgruppen umfassen C₃-C₁₀-Cycloalkylgruppen, wie Cyclobutyl, Cyclopentyl, Cyclohexyl und Cycloheptyl.

Geeignete Substituenten sind Cyano, Hydroxy, C₁₋₄-Alkyl und Halogen, wie F, Cl, Br, J.
(2) Phosphate der allgemeinen Formel (V) 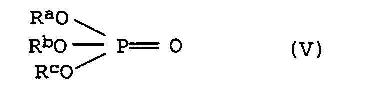 in der die Substituenten R^{a}, R^{b} und R^{c} gleich oder verschieden sind und die oben angegebenen Bedeutungen besitzen.

Beispiele für Phosphinoxide der Formel (IV) sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl) -phosphinoxid, Tris-(n-octyl)-phosphinoxid, Tris-(cyanoethyl)-phoxphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphos-phinoxid, Tris-(n-octyl)-phosinoxid und Tris-(cyanoethyl)-phosphinoxid.

Als Phosphate der Formel (V) kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jeder der Reste R^{a}, R^{b} und R^{c} ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Bevorzugte Mischungen aus Phosphinoxid und Phosphat sind: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phosphinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Das Molekulargewicht beträgt im allgemeinen nicht mehr als etwa 1000, bevorzugt etwa 150 bis etwa 800.

Des weiteren können Mischungen der höheren Phosphate und Monophosphate bzw. Monophosphinoxide in jedem Mischungsverhältnis eingesetzt werden.

Als Antitropfmittel (Komponente D) enthalten die Formmassen etwa 0,5 bis etwa 25, vorzugsweise etwa 0,5 bis etwa 20, und insbesondere etwa 0,5 bis etwa 15 Gew.-% eines Polymerisats auf Basis von Acrylamid bzw. Copolymere auf Basis von Acrylamid und bis zu 95 Gew.-% anderer Monomereinheiten. Erfindungsgemäße Antitropfmittel können somit z. B. 5-100 Gew.-% Acrylamid, wie beispielsweise 10-90 Gew.-%, 20-70 Gew.-% oder 40-60 Gew.-% enthalten. Comonomere können entsprechend in einem Anteil von 0-95 Gew.-%, wie z. B. 10-90 Gew.-%, 30-80 Gew.-% oder 40-60 Gew.-% enthalten sein. Geeignete Comonomere sind beispielsweise Acrylsäure, Methacrylsäure sowie deren Salze, Styrolsulfonsäure, Ethylensulfonsäure und deren Salze, Dimethylaminoethylmethacrylat, Dimethylaminoethylacrylat und deren Hydrochloride sowie Di-allyldimethylammoniumchlorid. Besonders bevorzugte Comonomereinheiten sind Acrylsäure, Natriumacrylat sowie Dimethylaminoethylacrylathydrochlorid. Insbesondere bevorzugt ist Natriumacrylat.

Die Herstellung der als Komponente D) verwendeten Polymerisate ist dem Fachmann bekannt und wird beispielsweise in "Encyclopedia of Polymer Science and Engineering", Vol. 1, S. 176 ff., Wiley, New York, ausführlich beschrieben. Sie kann in verdünnter wässriger Lösung oder als umgekehrte Suspensionspolymerisation erfolgen.

Bei der Polymerisation in verdünnter wäßriger Lösung werden vorzugsweise 7-20%ige Lösungen verwendet. Die Polymerisation kann in Batch-Reaktoren oder im kontinuierlichen Rührkessel durchgeführt werden. Als Initiatoren eignen sich Azo- und Peroxo-Verbindungen oder Redox-Systeme. Die bevorzugte Polymerisationstemperatur liegt zwischen 20 und 80°C. Weitere Hinweise zur Herstellung finden finden sich in "Encyclopedia of Polymer Science and Engineering", Vol. 1, S. 179 f., Wiley, New York.

Bei der umgekehrten Suspensionspolymerisation werden die wasserlöslichen Monomere in einem geeigneten Lösungsmittel suspendiert, die entstehenden Tröpfchen werden dann auspolymerisiert. Geeignete Lösungsmittel können sein: Toluol, Xylol, o-Dichlorbenzol. Angaben zur Reaktionsführung: Zeit 10 min bis 24 h
Temperatur: 20 bis 100°C (je nach Initiator)
Weitere Hinweise zur Reaktionsführung können den US-Patentschriften 2,982,749 und 3,284,393 entnommen werden.

Bevorzugt werden hochmolekulare Produkte verwendet, die sich durch eine Viskosität von mehr als 1,5 mPas, vorzugsweise 1,5 bis 10 mPas, insbesondere 2 bis 7 mPas, jeweils gemessen in 0,1%-iger wässriger Lösung auszeichnen. Neben Polyacrylamid-Homopolymeren sind insbesondere Copolymere aus Acrylamid mit etwa 5 bis etwa 95 Gew.-%, vorzugsweise 10 bis 90 Gew.-% Na-Acrylat bzw. Dimethylaminoethylacrylathydrochlorid bevorzugt. Solche Produkte sind beispielsweise unter dem Handelsnamen Sedipur® kommerziell erhältlich. Geeignete Produkte sind durch ein gewichtsmittleres Molekulargewicht von 1 bis 10.000.000 g/mol charakterisiert (Lichtstreuung).

Als Schlagzähmodifier (Komponente E) werden schlagzähmodifizierende Kautschuke in Anteilen von bis zu etwa 50, vorzugsweise bis zu etwa 25 und insbesondere bis etwa 20 Gew.-%, bezogen auf das Gesamtgewicht der Formmasse, eingesetzt.

Als Komponente E können von der Komponente B verschiedene, natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H.Illers und H.Breuer, Kolloidzeitschrift 190 (1), 16-34 (1963), von etwa -100°C bis +25°C, vorzugsweise unter 0°C aufweisen. Außerdem können auch entsprechend hydrierte Produkte eingesetzt werden.

Bevorzugte Schlagzähmodifier E sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind erfindungsgemäß brauchbar Vinylaromat-Dien-Blockcopolymerisate aus Blöcken, die eine Hartphase (Blocktyp S) und als Weichphase einen Block B/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches erfindungsgemäß geeignetes kautschukelastisches Blockcopolymerisat dadurch, daß die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäß verwendbares Blockcopolymerisat kann z.B. durch eine der folgenden allgemeinen Formeln (1) bis (11) dargestellt werden:
(1) (S-B/S)ₙ;
(2) (S-B/S)ₙ-S;
(3) B/S-(S-B/S)ₙ;
(4) X-[(S-B/S)ₙ]ₘ+1
(5) X-[(B/S-S)ₙ]ₘ+1;
(6) X-[(S-B/S)ₙ-S]ₘ+1;
(7) X-[(B/S-S)ₙ-B/S]ₘ+1;
(8) Y-[(S-B/S)ₙ]ₘ+1;
(9) Y-[(B/S-S)ₙ]ₘ+1;
(10) Y-[(S-B/S)ₙ-S]ₘ+1;
(11) Y-[(B/S-S)ₙ-B/S]ₘ+1;
wobei
- S: für einen vinylaromatischen Block,
- B/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat einer der allgemeinen Formeln S-B/S-S, X-[-B/S-S]2 und Y-[-B/S-S]₂ (Bedeutung der Abkürzungen wie vorstehend) und besonders bevorzugt ein Blockcopolymerisat, dessen Weichphase unterteilt ist in Blöcke
(12) (B/S)₁-(B/S)₂;
(13) (B/S)₁-(B/S)₂-(B/S)₁;
(14) (B/S)₁-(B/S)₂-(B/S)₃;
wobei die Indices 1, 2, 3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, daß ein kautschukelastisches Blockcopolymerisat gebildet wird. Solche Copolymerisate können z.B. eine der Strukturen (15) bis (18) haben
(15) B-(B/S)
(16) (B/S)-B-(B/S)
(17) (B/S)₁-B-(B/S)₂
(18) B-(B/S)₁-(B/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus etwa 25 bis 75 Gew.-% Styrol und etwa 25 bis 75 Gew.-% Butadien aufgebaut. Insbesondere bevorzugt sind Weichblöcke, die einen Butadienanteil von etwa 34 bis 69 Gew.-% und einen Styrolanteil etwa von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethyl-ether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die erfindungsgemäßen Polymere haben z.B. einen Anteil von 15 bis 40% an 1,2-Verknüpfungen und 85 bis 60% an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.-Butyllithium und tert.-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann etwa 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 1 bis 40, bevorzugt 10 bis 30 und besonder bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/ Butadien zwischen 25 und 70 Gew.-% liegt.

Durch den statischen Einbau der vinylaromatischen Verbindungen in den Weichblock des Blockcopolymeren und die Verwendung von Lewis-Basen während der Polymerisation wird die Glasübergangstemperatur (T_{g}) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-B/S-S, X-[-B/S-S]₂ und Y-[-B/S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt, sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Mischungen obiger Schlagzähmodifier sind einsetzbar.

Als weiteren Bestandteil (Komponente F) können die erfindungsgemäßen Formmassen auch übliche Zusatzstoffe und Verarbeitungshilfsmittel enthalten. Der Anteil dieser Zusätze beträgt im allgemeinen nicht mehr als etwa 60, vorzugsweise nicht mehr als etwa 50 und insbesondere nicht mehr als etwa 30 Gew.-%, bezogen auf das Gesamtgewicht der Komponenten A bis E.

Als Zusatzstoffe seien genannt Hitze- und Lichtstabilisatoren, Gleit- und Entformungsmittel, Färbemittel, wie Farbstoffe und Pigmente, in üblichen Mengen. Weitere Zusatzstoffe sind Verstärkungsmittel, wie Glasfasern, Kohlenstoff-Fasern, aromatische Polyamidfasern und/oder Füllstoffe, Gipsfasern, synthetische Calciumsilikate, Koalin, calciniertes Kaolin, Wollastonit, Talkum und Kreide.

Des weiteren kommen Gleitmittel, wie Polyethylenwachs, als Zusatzstoffe in Betracht.

Ruße oder Titandioxid können beispielsweise als Pigmente verwendet werden. Bei Verwendung von TiO₂ liegt die mittlere Teilchengröße in der Regel im Bereich von etwa 50 bis 400 nm, insbesondere von etwa 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen, beschichtet sind.

Als Ruße sollen mikrokristalline, feinteilige Kohlenstoffe verstanden werden (vgl. Kunststofflexikon, 7. Auflage 1989). Als geeignet seien die Ofenruße, Acetylenruße, Gasruße sowie durch thermische Herstellung erhältlichen Thermalruße genannt. Die Teilchengrößen liegen vorzugsweise im Bereich von etwa 0,01 bis 0,1 µm und die Oberflächen im Bereich von etwa 10² bis 10⁴ m²/g (BET/ASTM D 3037) bei DBP-Absorptionen von etwa 10² bis 10³ ml/100 g (ASTM D 2414).

Die Herstellung der erfindungsgemäßen Formmassen erfolgt zweckmäßigerweise durch Mischen der Komponenten bei Temperaturen im Bereich von 250 bis 320°C in üblichen Mischvorrichtungen, wie z.B. Knetern, Banburrymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen lassen sich z.B. durch Spritzguß oder Extrusion Formkörper herstellen, die flammwidrig sind, bei der Brandprüfung nach UL 94 nicht zum brennenden Abtropfen neigen und die des weiteren sehr gute Schmelzestabilität aufweisen. Die erfindungsgemäßen Formmassen eignen sich sehr gut zur Herstellung von Formteilen aller Art, z.B. durch Spritzguß oder Extrusion. Sie können weiterhin zur Herstellung von Folien und Halbzeug im Tiefzieh- oder Blasverfahren verwendet werden.

Die Erfindung wird nun anhand der folgenden Beispiele näher erläutert.

### Beispiel

### Herstellung thermoplastischer Formmassen

Unter Verwendung der im folgenden aufgelisteten Komponenten A bis F werden erfindungsgemäße Formmassen 1 bis 5 hergestellt und mit den Vergleichsformmassen V1 bis V5 hinsichtlich ihrer charakteristischen Eigenschaften verglichen.

### Komponente A)

Poly-2,6-dimethyl-1,4-phenylenether mit einem mittleren Molekulargewicht (M_{W}) von 40000 g/mol.

### Komponente B₁

Schlagfestes Polystyrol mit 9 Gew.-% Polybutadien und Zellteilchenmorphologie, mittlere Teilchengröße der Weichkomponente von 1,9 µm. Die VZ der Hartmatrix betrug 80 ml/g (0,5 %-ig in Toluol bei 23°C).

### Komponente B₂

Schlagfestes Polystyrol mit 11 Gew.-% Polybutadien und Zellteilchenmorphologie, mittlere Teilchengröße der Weichkomponente von 3,5 µm. Die VZ der Hartmatrix betrug 80 ml/g (0,5 %-ig in Toluol bei 23°C).

### Komponente C)

Resorcinoldiphenylphosphat, z.B. Fyroflex® RDP (Akzo)

### Komponente D)

- D₁:: Copolymer aus 60 Gew.-% Acrylamid und 40 Gew.-% Na-Acrylat, charakterisiert durch eine Viskosität von 3,6 mPas, gemessen in 0,1 %-iger wässriger Lösung bei 25°C.
- D₂:: Polyacrylamid, charakterisiert durch eine Viskosität von 4,1 mPas, bestimmt in 0,1 %-iger wässriger Lösung.
- D₃:: Polystyrol, M_{W}=1600000 g/mol, M_{W}/Mₙ=1,8; GPC, PS-Standards, für Vergleichsversuche.
- D₄:: Polyethylen M_{W}=1300000 g/mol; für Vergleichsversuche.

### Komponente E)

SEBS Blockkautschuk Kraton G 1650 (Shell AG).

### Komponente F)

Ruß Black Pearls 880 (als 15 %-iger Batch in Polystyrol, VZ=80 ml/g 0,5 %-ig in Toluol bei 23°C).

### Herstellung der thermoplastischen Formmassen

Die Komponenten A) bis F) wurden auf einem Zweiwellenextruder (ZSK 30 der Fa. Werner & Pfleiderer) bei 280°C gemischt, als Strang ausgetragen, gekühlt und granuliert.

Das getrocknete Granulat wurde bei 260 bis 280°C zu Rundscheiben, Flachstäben für die UL 94-Prüfung, und Normkleinstäben verarbeitet.

Die Schädigungsarbeit Wₛ wurde nach DIN 53 443 bei 23°C bestimmt. Die Wärmeformbeständigkeit der Proben wurde mittels der Vicat-Erweichungstemperatur, bestimmt nach DIN 53 460, mit einer Kraft von 49,05 N und einer Temperatursteigerung von 50 K je Stunde, an Normkleinstäben ermittelt.

Die Flammwidrigkeit und das Abtropfverhalten wurde nach UL 94 an Stäben von 1/16"-Dicke bestimmt, die angegebenen Brandzeiten stellen die Summe der Brandzeiten aus beiden Beflammungen dar.

Die Zusammensetzungen und Eigenschaften der thermoplastischen Formmassen sind in Tabelle 1 zusammengestellt.

**Tabelle 1:**

| Formmasse Nr. | V1 | 1 | 2 | 3 | V2 | V3 | V4 | V5 | 4 | 5 |
|---|---|---|---|---|---|---|---|---|---|---|
| Komponente [Gew.-%] | | | | | | | | | | |
| A | 40 | 39,1 | 38,3 | 38,3 | 39,1 | 38,3 | 38,3 | 32 | 30,5 | 30,5 |
| B₁ | 47 | 46,0 | 44,9 | 44,9 | 46,0 | 44,9 | 44,9 | 44,3 | 42,0 | 42,0 |
| B₂ | - | - | - | - | - | - | - | 2,4 | 2,4 | 2,4 |
| C | 10 | 10 | 10 | 10 | 10 | 10 | 10 | 14 | 14 | 14 |
| D₁ | - | 2 | 4 | - | - | - | - | - | 4 | - |
| D₂ | - | - | - | 4 | - | - | - | - | - | 4 |
| D₃ | - | - | - | - | 2 | 4 | - | - | - | - |
| D₄ | - | - | - | - | - | - | 4 | - | - | - |
| E | 3 | 2,9 | 2,8 | 2,8 | 2,9 | 2,8 | 2,8 | 4 | 3,8 | 3,8 |
| F | - | - | - | - | - | - | - | 3,3 | 3,3 | 3,3 |
| Ws [Nm] | 34 | 33 | 34 | 32 | 32 | 32 | 27 | 24 | 23 | 23 |
| Vicat B [°C] | 111 | 110 | 110 | 109 | 108 | 107 | 109 | 94 | 91 | 90 |
| UL 94 Klassifikation | V-2 | V-1 | V-0 | V-0 | V-2 | V-1 | V-1 | V-2 | V-1 | V-1 |
| UL 94 Brandzeit [s] | 71 | 57 | 42 | 41 | 83 | 95 | 146 | 154 | 89 | 93 |
| Stäbe abgetropft | 5 | 0 | 0 | 0 | 4 | 0 | 0 | 5 | 0 | 0 |

Die Versuche belegen die hohe Wirksamkeit der erfindungsgemäßen Antitropfmittel. Unter Verwendung der Komponenten D₁ und D₂ als Antitropfmittel lassen sich thermoplastische Formmassen herstellen, die ein eindeutig überlegenes Eigenschaftsprofil aufweisen.

## Patentansprüche

1. Flammwidrige thermoplastische Formmasse, enthaltend
A) mindestens einen Polyphenylenether,
B) mindestens ein vinylaromatisches Polymer, und
C) mindestens ein Flammschutzmittel,
dadurch gekennzeichnet, daß es außerdem
D) als Antitropfmittel ein hochmolekulares Polymerisat auf Basis von Acrylamid mit einer Viskosität von mehr als etwa 1,5 mPas, gemessen in 0,1%-iger wäßriger Lösung bei 25°C, umfaßt.

2. Formmasse nach Anspruch 1, dadurch gekennzeichnet, daß das Antitropfmittel, bezogen auf das Gesamtgewicht des Antitropfmittels, bis zu 95 Gew.-% von Acrylamid verschiedenen Comonomereinheiten umfaßt.

3. Formmasse nach Anspruch 2, dadurch gekennzeichnet, daß als Comonomer wenigstens eine Verbindung verwendet wird, die ausgewählt ist unter Acrylsäure, Methacrylsäure, Styrolsulfonsäure, Ethylensulfonsäure und den Salzen davon, Dimethylaminoethylmethacrylat, Dimethylaminoethylacrylat und den Hydrochloriden davon sowie Diallyldimethylammoniumchlorid.

4. Formmasse nach einem der Ansprüche 1 bis 3, enthaltend
A) etwa 5 bis etwa 97,5 Gew.-% Polyphenylenether,
B) etwa 1 bis etwa 93,5 Gew.-% Styrolpolymerisat,
C) etwa 1 bis etwa 20 Gew.-% eines Flammschutzmittels,
D) etwa 0,5 bis etwa 25 Gew.-% Antitropfmittel,
E) 0 bis etwa 50 Gew.-% Schlagzähmodifier, sowie
F) 0 bis etwa 60 Gew.-% üblicher Zusätze.

5. Formmasse nach einem der vorhergehenden Ansprüche, dadurch gekennzeichnet, daß das Flammschutzmittel ausgewählt ist unter Phosphinoxiden, organischen Monophosphaten und organischen Oligophosphorverbindungen, und Mischungen davon.

6. Verwendung einer Formmasse nach einem der Ansprüche 1 bis 5 zur Herstellung von Fasern, Folien und Formkörpern.

7. Fasern, Folien und Formkörper, hergestellt unter Verwendung einer Formmasse nach einem der Ansprüche 1 bis 5.

## Claims

1. A flame-retardant thermoplastic molding material containing
A) at least one polyphenylene ether,
B) at least one vinylaromatic polymer and
C) at least one flameproofing agent,
which furthermore comprises
D) as an antidrip agent, a high molecular weight polymer based on acrylamide and having a viscosity of more than about 1.5 mPas, measured in 0.1% strength aqueous solution at 25°C.

2. A molding material as claimed in claim 1, wherein the antidrip agent comprises up to 95% by weight, based on the total weight of the antidrip agent, of comonomer units other than acrylamide.

3. A molding material as claimed in claim 2, wherein the comonomer used is at least one compound which is selected from acrylic acid, methacrylic acid, styrenesulfonic acid, ethylenesulfonic acid and the salts thereof, dimethylaminoethyl methacrylate, dimethylaminoethyl acrylate and the hydrochlorides thereof and diallyl dimethylammonium chloride.

4. A molding material as claimed in any of claims 1 to 3, containing
A) from about 5 to about 97.5% by weight of polyphenylene ether,
B) from about 1 to about 93.5% by weight of styrene polymer,
C) from about 1 to about 20% by weight of flameproofing agent,
D) from about 0.5 to about 25% by weight of antidrip agent,
E) from 0 to about 50% by weight of impact modifier, and
F) from 0 to about 60% by weight of conventional additives.

5. A molding material as claimed in any of the preceding claims, wherein the flameproofing agent is selected from phosphine oxides, organic monophosphates and organic oligophosphorus compounds and mixtures thereof.

6. The use of a molding material as claimed in any of claims 1 to 5 for the production of fibers, films and moldings.

7. A fiber, film or molding produced using a molding material as claimed in any of claims 1 to 5.

## Revendications

1. Matière à mouler thermoplastique ignifuge contenant
A) au moins un éther de polyphénylène,
B) au moins un polymère vinylaromatique et
C) au moins un agent ignifugeant,
caractérisée par le fait qu'elle contient en outre
D) en tant qu'agent anti-gouttes un polymère à haut poids moléculaire à base d'acrylamide ayant une viscosité supérieure à environ 1,5 mPa.s, la mesure étant faite sur une solution aqueuse à 0,1 % à 25° C.

2. Matière à mouler selon revendication 1, caractérisée par le fait que l'agent anti-gouttes contient jusqu'à 95 % de son poids de motifs de comonomères autres que l'acrylamide.

3. Matière à mouler selon revendication 2, caractérisée par le fait que l'on utilise en tant que comonomère au moins un composé choisi parmi l'acide acrylique, l'acide méthacrylique, l'acide styrènesulfonique, l'acide éthylènesulfonique et leurs sels, le méthacrylate de diméthylaminoéthyle, l'acrylate de diméthylaminoéthyle et leurs chlorhydrates et le chlorure de diallyldiméthylammonium.

4. Matière à mouler selon une des revendications 1 à 3, contenant
A) environ 5 à 97,5 % en poids d'éther de polyphénylène,
B) environ 1 à 93,5 % en poids de polymère du styrène,
C) environ 1 à 20 % en poids d'un agent ignifugeant,
D) environ 0,5 à 25 % en poids d'agent anti-gouttes,
E) 0 à 50 % en poids environ d'un modifiant conférant la résistance au choc et
F) 0 à 60 % en poids environ d'additifs usuels.

5. Matière à mouler selon une des revendications qui précèdent, caractérisée par le fait que l'agent ignifugeant est choisi parmi les oxydes de phosphines, les monophosphates organiques, les composés organiques oligophosphorés et leurs mélanges.

6. Utilisation d'une matière à mouler selon une des revendications 1 à 5 pour la fabrication de fibres, de feuilles et d'objets moulés.

7. Fibres, feuilles et objets moulés fabriqués à l'aide d'une matière à mouler selon une des revendications 1 à 5.
